# EUROPÄISCHE PATENTANMELDUNG

(11) **EP 0 897 687 A1**
(43) Veröffentlichungstag der Anmeldung: **24.02.1999**
(21) Anmeldenummer: 98108281.1
(22) Anmeldetag: 07.05.1998
(51) Int. Cl.: A47J 31/08

(54) **Filterpapiereinsatz für ein Filtergefäss**

(30) Priorität: 22.08.1997 DE 29715032 U
(71) Anmelder: MELITTA HAUSHALTSPRODUKTE GmbH & Co. Kommanditgesellschaft, D-32427 Minden (DE)
(72) Erfinder: Sachtleben, Andreas, 32427 Minden (DE); Dölfer, Rainer, Dr, 32457 Porta Westfalica (DE); Jones, Frank Ronald, 32457 Porta Westfalica (DE); Baumer, Hubert, 37671 Höxter (DE)
(74) Vertreter: Stracke, Alexander, Dipl.-Ing.

(57) **Zusammenfassung**

Gegenstand der Erfindung ist ein Filterpapiereinsatz für ein Filtergefäß, vorzugsweise zur Herstellung von Aromnaauszügen aus Kaffee oder Tee.

Gemäß der Erfindung ist der Filterpapiereinsatz aus einem mit Knick- oder Faltlinien (2) versehenen, einlagigen Papierzuschnitt hergestellt und durch Faltung längs der dafür vorgesehenen Knick- oder Faltlinien (2) zu einem an die Innenwandungen des zugehörigen Filtergefäßes anlegbaren Behältnis (3) aufschichtbar.

Ein derartiger Filterpapiereinatz ist äußerst preiswert herstellbar und andererseits in handelsüblichen Losgrößen platzsparend zu verpacken.

Auf das Anbringen von Prägenähten oder anderen Verbindungsmitteln kann vollständig verzichtet werden. Die Knick- oder Faltlinien können im Durchlauf bei der Ausstanzung oder beim Ausschneiden entsprechender Papierzuschnitte kostengünstig hergestellt werden. Eine Vielzahl von derartigen Papierzuschnitten kann platzsparend in entsprechenden Umverpackungen verpackt werden.

## Beschreibung

Die vorliegende Erfindung betrifft einen Filterpapiereinsatz für ein Filtergefäß, insbesondere zur Herstellung von Aromaauszügen aus Kaffee oder Tee.

Filterpapiereinsätze für Filtergefäße, insbesondere zur Herstellung von Aromaauszügen aus Kaffee oder Tee, sind grundsätzlich bekannt.

Die überwiegende Zahl der bekannten Filterpapiereinsätze besteht aus übereinanderliegenden Materiallagen, die eine kegelstumpfartige Grundfläche aufweisen. An einer Seitenkante sind die beiden Materiallagen zusammengefaltet und im Bereich der gegenüberliegenden Seitenkante sowie im Bodenbereich durch eine Prägenaht miteinander verbunden.

Es sind auch sogenannte Korbfilter bekannt, bei denen sich an eine vorzugsweise kreisrunde Bodenfläche ein vielfach gefalteter, plissierter Seitenrand anschließt.

Diese Korbfilter werden in aufgestellter Gebrauchsform in vorbestimmten Losgrößen verpackt. Dabei sind die einzelnen Korbfilter ineinandergesteckt.

Bei der zuerst genannten Art der Filterpapiereinsätze ist die Herstellung von Prägenähten erforderlich.

Bei der zweiten Art von bekannten Filterpapiereinsätzen ergeben sich relativ große Umverpackungen für eine vergleichsweise geringe Anzahl von Korbfiltern.

Der vorliegenden Erfindung liegt die Aufgabe zugrunde, einen Filterpapiereinsatz der gattungsgemäßen Art zu schaffen, der einerseits äußerst preiswert herstellbar und andererseits in handelsüblichen Losgrößen platzsparend zu verpacken ist.

Diese Aufgabe wird erfindungsgemäß dadurch gelöst, daß der Filterpapiereinsatz aus einem mit Knick- oder Faltlinien versehenen, einlagigen Papierzuschnitt hergestellt und durch Faltung längs der dafür vorgesehenen Knick- oder Faltlinien zu einem an die Innenwandungen des zugehörigen Filtergefäßes anlegbaren Behältnis auflegbar ist.

Ein derartiger Filterpapiereinsatz kann extrem preiswert hergestellt werden, da auf die Anbringung von Prägenähten oder anderen Verbindungsmitteln vollständig verzichtet werden kann. Die Knick- oder Faltlinien können im Durchlauf bei der Ausstanzung oder beim Ausschneiden entsprechender Papierzuschnitte kostengünstig hergestellt werden. Eine Vielzahl von derartigen Papierzuschnitten kann platzsparend in entsprechenden Umverpackungen verpackt werden.

Erst kurz vor dem Gebrauch wird ein derartiger Papierzuschnitt aus seiner Umverpackung entnommen und kann vom Verbraucher leicht und mühelos durch entsprechende Faltung zu einem Behältnis aufgerichtet werden, welches an die Innenwandungen des jeweils zugehörigen Filtergefäßes angelegt werden kann. Anschließend wird, wie üblich, Kaffeemehl oder Tee in das Behältnis eingefüllt und dann das zur Herstellung von Aromaauszügen benötigte Brühwasser eingelassen.

Weitere Merkmale der Erfindung sind Gegenstand von Unteransprüchen.

Vorteilhafte Ausführungsbeispiele der Erfindung sind in den beigefügten Zeichnungen dargestellt und werden im folgenden näher beschrieben.

Es zeigen:
- Figur 1: einen flachliegenden, einlagigen Papierzuschnitt mit Knick- oder Faltlinien zur Bildung eines Filterpapiereinsatzes,
- Fig. 2a-2c: perspektivische Darstellungen während des Faltvorganges vom flachliegenden Zuschnitt gemäß Figur 1 bis zum aufgerichteten Filterpapiereinsatz gemäß Figur 2c,
- Figur 3: einen flachliegenden Papierzuschnitt mit vorgefertigten Knick- oder Faltlinien zur Bildung eines Filterpapiereinsatzes nach einem weiteren Ausführungsbeispiel der Erfindung,
- Fig. 4a u. 4b: perspektivische Darstellungen des teilweise bzw. vollständig aufgerichteten Papierzuschnittes gemäß Figur 3,
- Figur 5: einen mit vorgefertigten Knick- oder Faltlinien versehenen einlagigen Papierzuschnitt nach einem weiteren Ausführungsbeispiel der Erfindung,

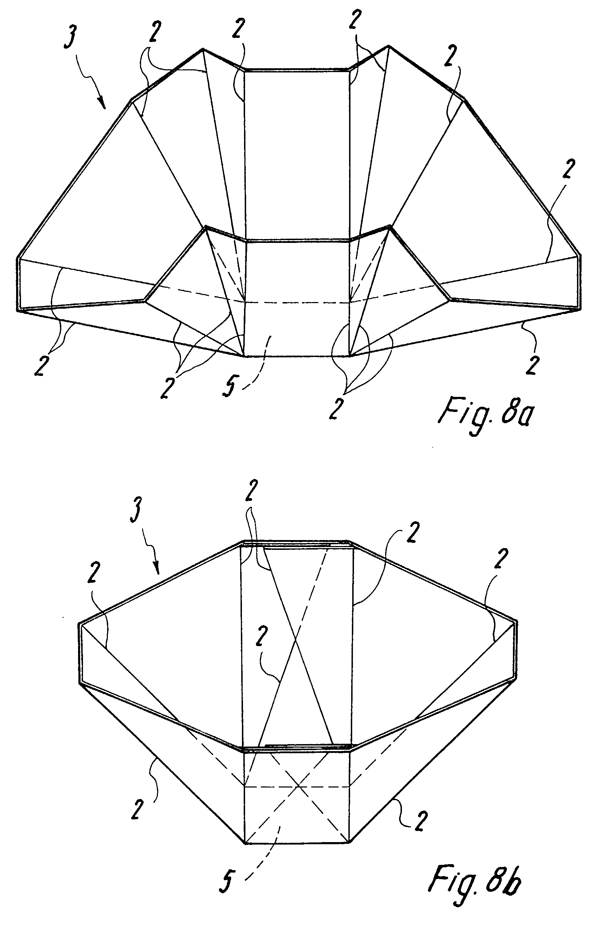

- Fig. 6a u. 6b: perspektivische Darstellungen des teilweise bzw. vollständig aufgerichteten Papierzuschnittes gemäß Figur 5,
- Figur 7: einen weiteren, flachliegenden und mit Knick- oder Faltlinien versehenen Papierzuschnitt zur Bildung eines Filterpapiereinsatzes,
- Fig. 8a u. 8b: perspektivische Darstellungen des teilweise bzw. vollständig aufgerichteten Papierzuschnittes gemäß Figur 7,
- Figur 9: einen flachliegenden Papierzuschnitt zur Herstellung eines Filterpapiereinsatzes nach einem weiteren Ausführungsbeispiel der Erfindung,
- Figur 10: den aus dem Papierzuschnitt gemäß Figur 9 aufgerichteten Filterpapiereinsatz,
- Figur 11: einen flachliegenden Papierzuschnitt zur Bildung eines Filterpapiereinsatzes nach einem weiteren Ausführungsbeispiel der Erfindung,
- Figur 12: den aus dem Papierzuschnitt gemäß Figur 11 aufgerichteten Filterpapiereinsatz.

Bei allen in den Zeichnungen dargestellten Ausführungsbeispielen der Erfindung ist jeweils mit dem Bezugszeichen 1 ein flachliegender, einlagiger Papierzuschnitt bezeichnet, der durch Faltung längs dafür vorgesehener bzw. vorgefertigter Knick- oder Faltlinien 2 zu einem Behältnis aufrichtbar ist, welches an die Innenwandungen eines nicht dargestellten, zugehörigen Filtergefäßes angelegt werden kann.

Je nach Grundfläche des einlagigen Papierzuschnittes 1 einerseits und je nach Anordnung der Knick- oder Faltlinien 2 andererseits können verschiedenartig geometrisch geformte Behältnisse nahtfrei gefertigt werden.

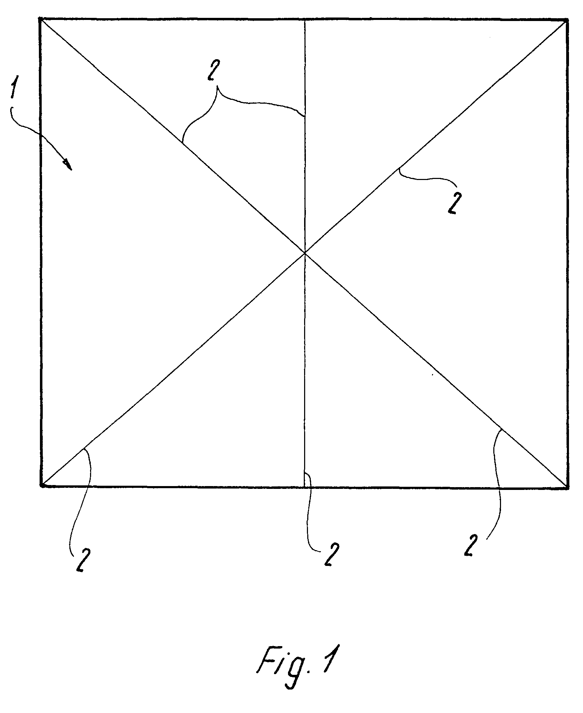

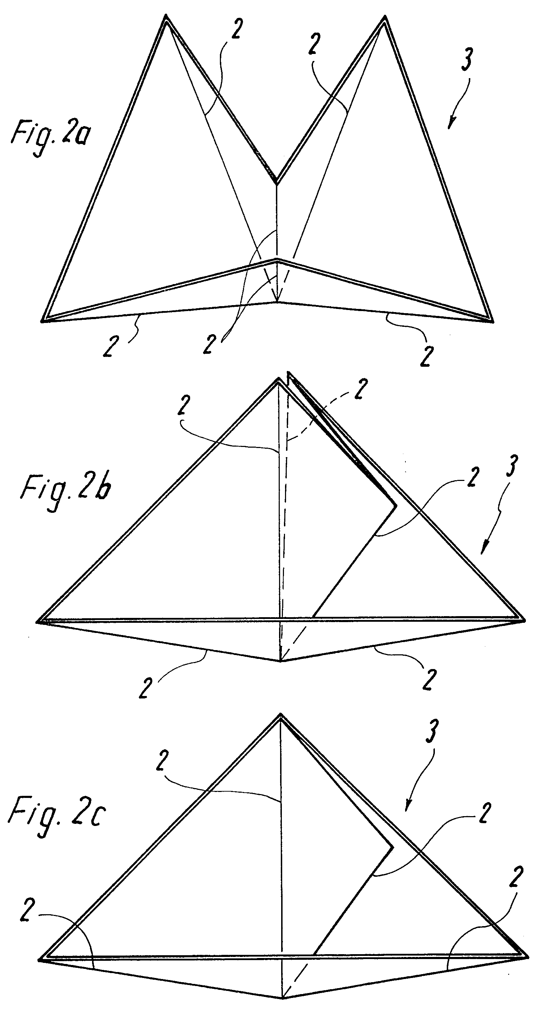

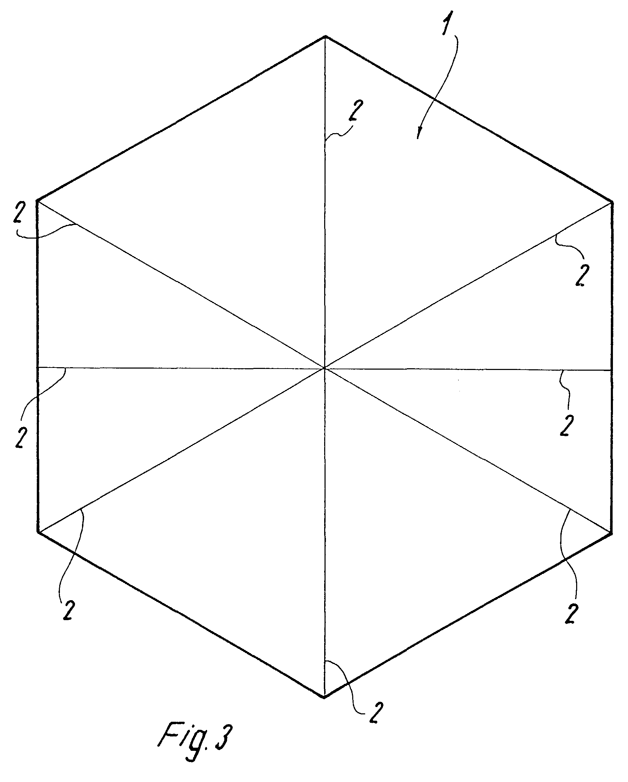

So wird beim Ausführungsbeispiel gemäß den Figuren 1-2c von einem im wesentlichen quadratischen, einlagigen Papierzuschnitt 1 ausgehend ein etwa tetraederförmiges Behältnis 3 erstellt. Dieses wird in ein entsprechend geformtes Filtergefäß eingesetzt und kann dann Kaffeemehl oder Tee aufnehmen und durch das eingefüllte, heiße Brühwasser wird sich das vorgefaltete Behältnis 3 noch intensiver und formschlüssiger an die Innenwandungen des Filtergefäßes anschmiegen als im rein vorgefalteten Zustand.

Auf eine Prägenaht oder andere Verbindungsmittel kann bei einem derartig gestalteten Filterpapiereinsatz vollständig verzichtet werden.

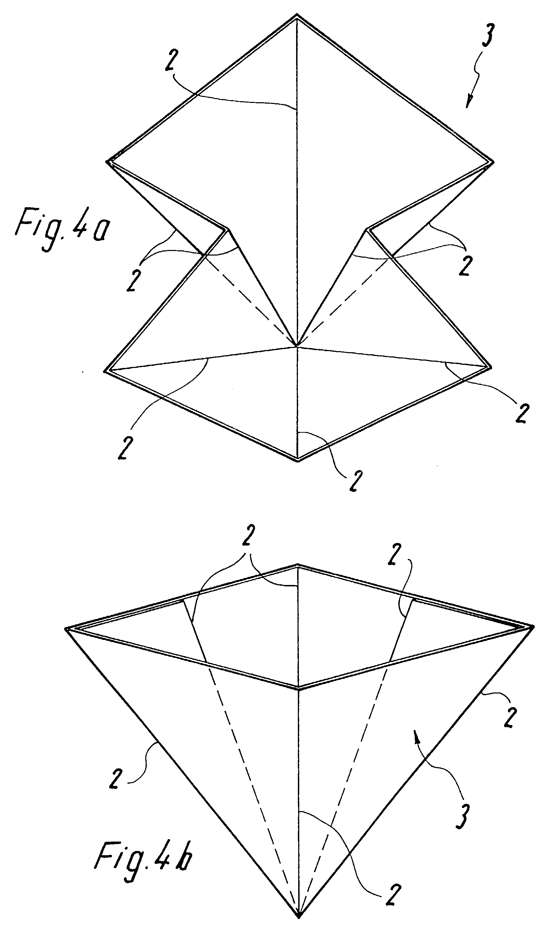

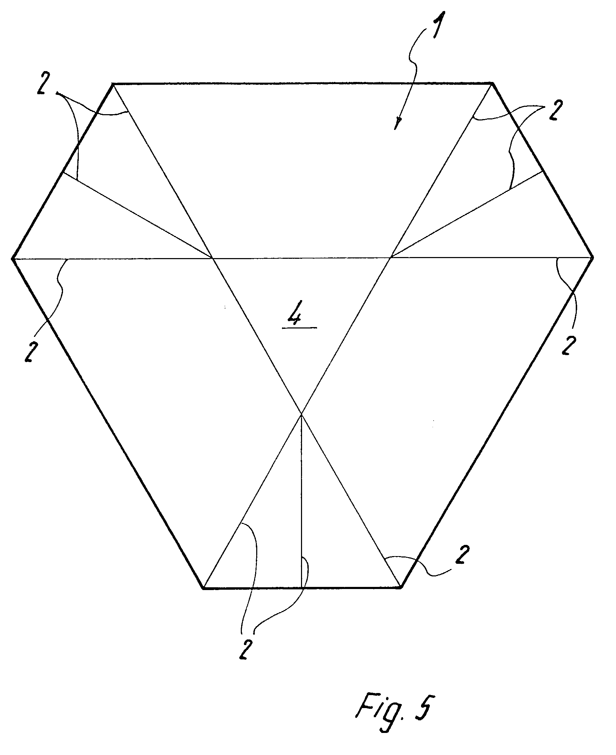

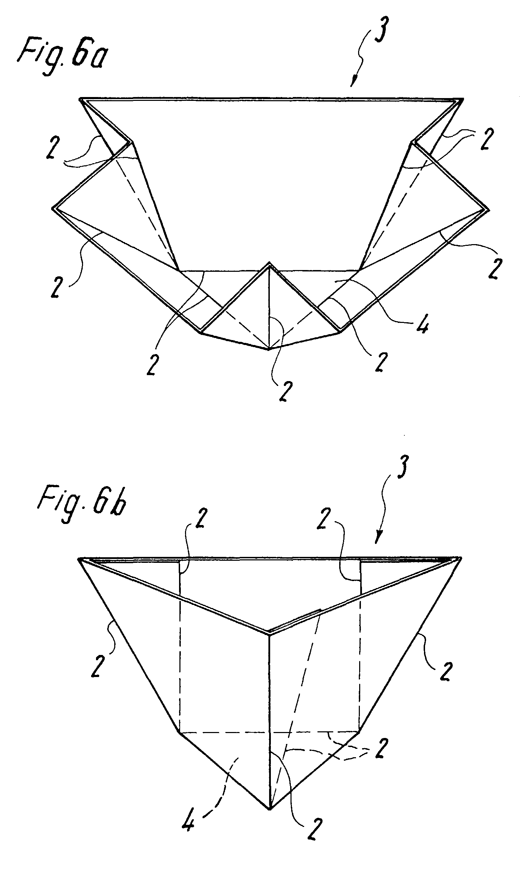

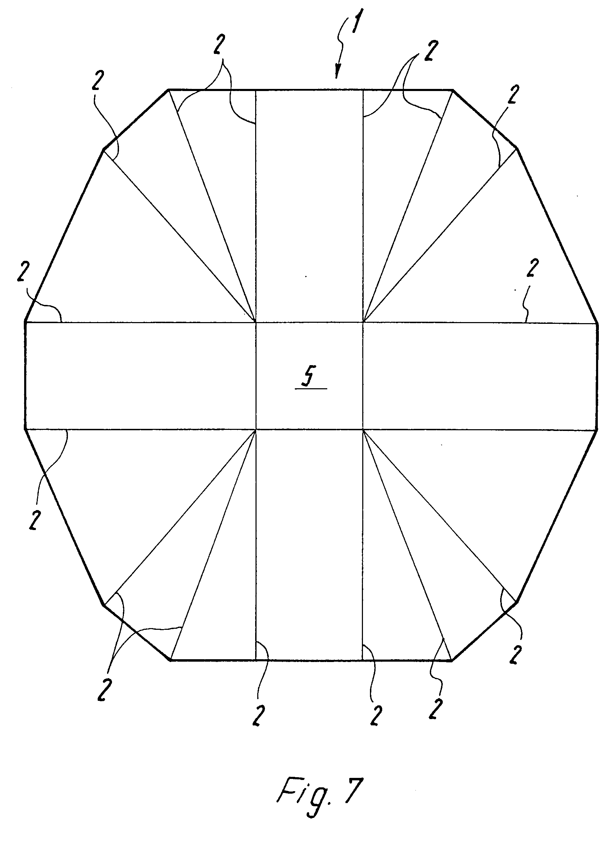

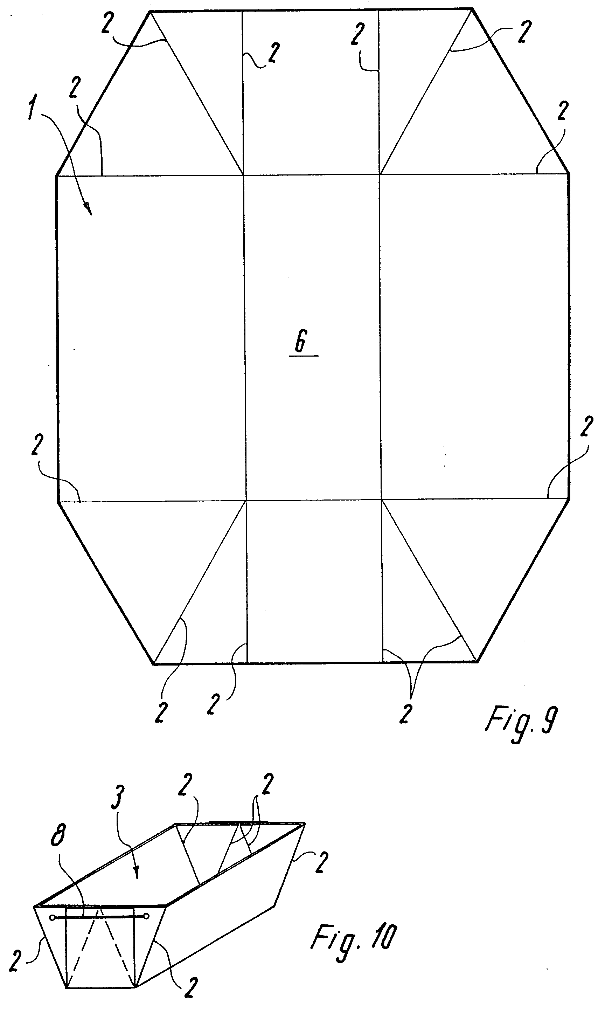

Die Figuren 3-4b zeigen ein Ausführungsbeispiel der Erfindung, bei dem, ausgehend von einem sechseckigen Papierzuschnitt letztlich ein pyramidenartiges Behältnis 3 (siehe Figur 4b) aufgerichtet werden kann. Aus dem Papierzuschnitt 1 gemäß Figur 5 kann ein Behältnis 3 aufgerichtet werden, welches einen dreieckigen Querschnitt aufweist und einen ebenfalls dreieckigen Boden 4 besitzt. Der Papierzuschnitt 1 gemäß dem Ausführungsbeispiel nach den Figuren 7-8b ist zu einem Behältnis 3 aufrichtbar, welches einen quadratischen oder rechteckigen Boden 5 und ansonsten einen achteckigen Querschnitt aufweist.

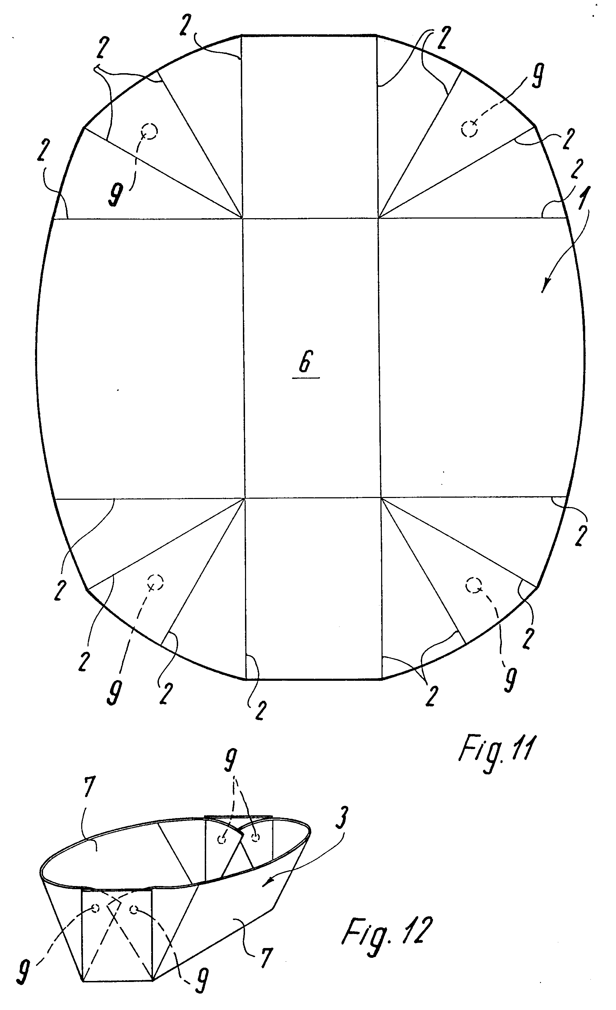

Der in Figur 9 dargestellte einlagige Papierzuschnitt 1 wird zu einem trogartigen Behältnis 3 aufgerichtet, so wie dies in Figur 10 dargestellt ist. Dabei ist der Boden 6 rechteckförmig.

Schließlich zeigen die Figuren 11 und 12 noch einen Papierzuschnitt 1 und ein Behältnis 3, welch Letzteres einen rechteckigen Boden 6 und, in Abweichung vom Ausführungsbeispiel gemäß Figur 10, ausgewölbte Seitenwandungen 7 aufweist.

Die verschiedenen Ausführungsbeispiele mit den unterschiedlichen Grundflächen der jeweiligen Papierzuschnitte 1 und der unterschiedlichen Anordnung der Knick- oder Faltlinien 2 stehen lediglich stellvertretend für die vielfältigen Möglichkeiten, auf einem einlagigen Papierzuschnitt 1 ein Behältnis mit gewünschten geometrischen Formen zu bilden.

In den Figuren 10 und 12 ist darüber hinaus angedeutet, daß durch Halte- oder Verbindungsmittel wie beispielsweise ein elastisches Band 8 (siehe Figur 10) oder durch Klebepunkte 9 (siehe Figur 12) mehrere, im aufgerichteten Zustand übereinanderliegende Papierlagen gegeneinander fixiert werden können, ohne daß hierfür Prägenähte angefertigt werden müßten.

Durch die an dem jeweiligen Papierzuschnitt 1 angebrachten, vorgefertigten Knick- oder Faltlinien 2 ist es prinzipiell für jeden Benutzer einfach, aus dem zunächst flachliegenden Papierzuschnitt 1 ein Behältnis 3 aufzurichten. Insoweit können entsprechend flachliegende Papierzuschnitte 1 in handelsüblichen Losgrößen platzsparend in einer gemeinsamen Verpackung in den Handel gebracht werden.

Es ist aber auch vorstellbar, schon aufgerichtete Behältnisse 3 ineinanderzustapeln und in entsprechenden Losgrößen in einer gemeinsamen Umverpackung zusammenzufassen.

Aus Platzgründen ist allerdings die Auslieferung im flachliegenden Zustand vorzuziehen.

Die Grundflächen können dreieckig, viereckig oder darüber hinausgehend mehreckig sein. Es können 3-, 4- oder 5-seitige Pyramiden oder Pyramidenstümpfe mit entsprechenden Bodenflächen gebildet werden.

## Patentansprüche

1. Filterpapiereinsatz für ein Filtergefäß, vorzugsweise zur Herstellung von Aromaauszügen aus Kaffee oder Tee, **dadurch gekennzeichnet, daß** der Filterpapiereinsatz aus einem mit Knick- oder Faltlinien (2) versehenen, einlagigen Papierzuschnitt (1) hergestellt und durch Faltung längs der dafür vorgesehenen Knick- oder Faltlinien (2) zu einem an die Innenwandungen des zugehörigen Filtergefäßes anlegbaren Behältnis (3) aufrichtbar ist.

2. Filterpapiereinsatz nach Anspruch 1, **dadurch gekennzeichnet, daß** das aufgerichtete Behältnis (3) tetraeder- oder pyramidenförmig gestaltet ist.

3. Filterpapiereinsatz nach Anspruch 1, **dadurch gekennzeichnet, daß** das Behältnis (3) einen dreieckigen, quadratischen, rechteckigen oder höherzahligen mehreckigen Boden (5, 6) aufweist.

4. Filterpapiereinsatz nach einem oder mehreren der vorhergehenden Ansprüche, **dadurch gekennzeichnet, daß** mehrere, übereinanderliegende Materiallagen des Behältnisses (3) durch Halte- oder Verbindungsmittel gegeneinander gesichert sind.

5. Filterpapiereinsatz nach Anspruch 4, **dadurch gekennzeichnet, daß** als Halte- oder Verbindungsmittel elastische Bänder (8) vorgesehen sind.

6. Filterpapiereinsatz nach Anspruch 4, **dadurch gekennzeichnet, daß** als Halte- oder Verbindungsmittel Klebepunkte (9) vorgesehen sind.
